# EUROPEAN PATENT SPECIFICATION

(11) **EP 3 859 271 B1**
(45) Date of publication and mention of the grant of the patent: **28.12.2022**
(21) Application number: 21154383.0
(22) Date of filing: 29.01.2021
(51) Int. Cl.: G01B 11/24, G01B 11/245, G06T 7/55, B21C 51/00, B21B 38/00

(54) **APPARATUS AND METHOD FOR MEASURING A SHAPED WIRE OBJECT**
VORRICHTUNG UND VERFAHREN ZUR VERMESSUNG EINES GEFORMTEN DRAHTOBJEKTS
APPAREIL ET PROCÉDÉ POUR MESURER UN OBJET DE TYPE FIL FAÇONNÉ

(30) Priority: 31.01.2020 IT 202000001957
(43) Date of publication of application: 04.08.2021
(73) Proprietor: Microstudio S.r.l., 21010 Besnate (VA) (IT)
(72) Inventor: CALAFA', Giampaolo, 21010 BESNATE (VA) (IT)
(74) Representative: Pietra, Giulia

(56) References cited:
- EP-A1- 3 346 230
- CN-U- 202 692 953
- DE-A1-102006 024 408
- JP-A- 2018 077 168

## Description

The present invention generally relates to the field of measuring instruments. In particular, the present invention relates to an instrument and method for measuring a shaped wire object (in particular, but not exclusively, a spring), i.e. for determining its shape and providing a measurement of at least one geometric parameter thereof.

In the following description, the expression "shaped wire object" will indicate an object formed by a portion of rigid or elastic wire (for example, a steel wire) shaped so as to follow, in the three-dimensional space or in a plane, a path defining the shape of the object.

The shape depends on the function that the object must perform.

An example of a shaped wire object is a spring. The springs may be of different types, depending on their shape and function. For example, compression springs exist, in which the wire is helically wound so as to form several turns and give the spring a cylindrical or conical shape. Torsion and tension springs also have a cylindrical or conical winding, and furthermore, at their opposite ends, they have legs or rings which allow the spring to be hooked to the mechanical components which exert torsion or tension thereon. There are also various other types of springs for special applications (e.g. ski-stoppers), having a wide variety of shapes and sizes.

In the following description, reference will be made to the measuring of springs for the sake of simplicity. This however is not limiting, since the invention is equally applicable to any type of object (two-dimensional or three-dimensional) in shaped wire.

Measuring a spring, i.e. determining its shape and providing the measurement of one or more geometric parameters thereof, is of interest to evaluate its quality and , for example, to determine whether it satisfies certain minimum quality requirements below which the spring is to be discarded. For example, in case of compression springs, the verticality of the spring and the degree of parallelism of its end coils to which the compression loads are applied are parameters indicative of the quality of the spring.

Patent application IT MI20051411 in the name of Microstudio S.A.S. describes an apparatus for measuring a helical spring (in particular, a compression spring), in which the spring is positioned on a rotating plate and images thereof are acquired at different viewing angles. The images are processed and a three-dimensional description of the spring is obtained therefrom, for example in terms of the height of the wire as the angle of observation varies.

IT 1 392 057 in the name of Microstudio S.A.S. describes an apparatus for measuring a coil spring which acquires different sequences of spring images, each sequence being obtained by applying a different compression load to the spring. A dynamic measurement of the spring is thus provided.

CN 202692953 discloses a spring shape digital photographing detection system comprising an industrial personal computer, a PLC (Programmable Logic Controller), a tested workpiece photographing device, a display screen and an alarming device. The tested workpiece photographing device comprises a photographing chamber, at least one servo motor, at least one rotating frame driven by the servo motor, a backlight source and at least one CCD photographing device.

JP 2018/077168 discloses a simulator for measuring a three-dimensional shape, comprising a camera for imaging a shape measurement object; a first extraction unit for extracting a feature point of the shape measurement object from the image acquired by the camera; a generation unit for generating, in a computer, a virtual object that corresponds to the shape measurement object and a virtual camera that corresponds to the camera; a second extraction unit for extracting a feature point of the virtual object from a virtual image acquired by the virtual camera; and a correction unit for correcting a numerical expression parameter for the generation unit to generate the virtual object on the basis of a difference between a first feature point extracted by the first extraction unit and a second feature point extracted by the second extraction unit.

These known apparatuses have been specifically developed for the measurement of helical springs. They therefore do not allow a measurement of springs with other shapes or, more generally, of shaped wire objects of other shapes.

It is an object of the present invention to provide an instrument and method for measuring a shaped wire object (in particular, but not exclusively, a spring) of arbitrary shape.

According to embodiments of the present invention, this object is achieved by an instrument for measuring a shaped wire object, comprising a rotatable support, an image acquisition system and a data processing unit. The shaped wire object is fixed to the rotatable support. The image acquisition system comprises at least two image acquisition devices with optical axes not parallel to each other (for example, one with an optical axis perpendicular to the axis of rotation of the rotatable support and one with an optical axis inclined with respect thereto). As the support rotates, each image acquisition device acquires a respective sequence of images of the object. The data processing unit receives the image sequences and reconstructs a virtual sculpture of the object therefrom. The virtual sculpture is obtained starting from an initial volume and subtracting from this initial volume one or more portions of volume in which the object is not present, determined on the basis of the sequences of acquired images. Thus, within the virtual sculpture, the data processing unit identifies a sequence of wire centers representative of the path the shaped wire performs to form the object.

In this way, the shape of the shaped wire object is reconstructed. On this reconstruction it is therefore possible to carry out different geometric measurements, depending on the shape and function of the object.

Advantageously, the reconstruction can be carried out on any two-dimensional or three-dimensional object made of a shaped wire, independently of its shape. If a support capable of rotatably supporting the object is provided, neither the acquisition of the images nor their subsequent processing assume any constraint on the shape of the object. The image acquisition system with two (or more) devices with optical axes not parallel to each other actually allows to provide sequences of images which allow the reconstruction of the virtual sculpture of the object (i.e. of the volume inside which the object is located) without any constraint on its shape. The search for the sequence of the wire centers - which substantially represents the path of the wire, hence the shape of the object - is thus limited in the three-dimensional space to the virtual sculpture alone, i.e. portions of the three-dimensional space in which the object is certainly not found are excluded from the search. This makes the determination of the sequence of the wire centers efficient from the computational point of view and accurate.

The invention is set out in the appended set of claims.

The present invention will become clearer from the following detailed description, given by way of non-limiting example, to be read with reference to the accompanying drawings in which:
- Figure 1 schematically shows an instrument for measuring a shaped wire object, according to an embodiment of the present invention;
- Figure 2 shows in greater detail a spring resting on the rotatable support of the instrument of Figure 1;

- Figure 3 is a flow chart of the operation of the instrument of Figure 1, according to an embodiment of the present invention;
- Figure 4 shows the spring to be measured within the initial volume from which the virtual sculpture is obtained, according to an embodiment of the present invention;
- Figures 5a and 5b show a step of determining the virtual sculpture, according to an embodiment of the present invention;
- Figure 6 shows a comparison between the spring and its virtual sculpture;
- Figure 7 schematically shows a step of determining the wire centers, according to an embodiment of the present invention;
- Figure 8 shows a sequence of exemplary wire centers; E
- Figure 9 shows exemplary geometric measurements obtained on the vector reconstruction of the spring.

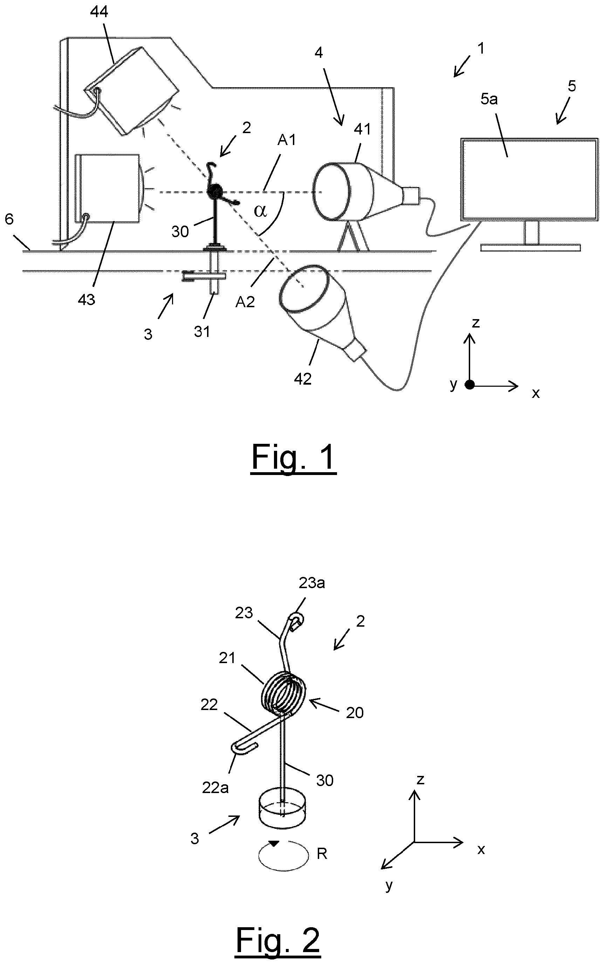

Figure 1 schematically shows an instrument 1 for measuring a shaped wire object 2, according to an embodiment of the present invention.

By way of non-limiting example, the shaped wire object 2 (shown in greater detail in Figure 2) is a torsion spring, comprising a cylindrical winding 20 formed by a number of adjacent coils 21 (solid coils) and two stems or endings 22, 23 for the application of the torsion loads, each of which is provided with a bent end 22a, 23a for connection to the mechanical components applying the torsion loads.

The instrument 1 preferably comprises a support 3, an image acquisition system 4, a data processing unit 5 and a support plane 6.

The support 3 and the image acquisition system 4 are preferably supported by the (and possibly fixed to) support plane 6. The support plane 6 may be arranged horizontally, as shown in Figure 1. However, this is not limiting, since the support plane 6 could be arranged vertically or in an inclined manner.

In Figures 1 and 2, a Cartesian reference system xyz is shown next to the instrument 1 and to the spring 2 and will be used in the following for the description of the structure and operation of the instrument 1. The axis x and the axis y - parallel to the support plane 6 - will hereinafter also be referred to as "longitudinal axis" and "transverse axis". The axis z - perpendicular to the support plane 6, which by way of example is arranged horizontally in Figure 1 - hereinafter it will also be referred to as "vertical axis".

The support 3 is preferably configured to support the spring 2. Its shape depends on the shape of the spring 2 and is such as to have an encumbrance as limited as possible, so as not to interfere with the measurement process on the spring 2 carried out by the instrument 1. According to advantageous embodiments, the support 3 does not comprise any bearing surface for the spring 2, but (as shown in Figures 1 and 2) a shaft 30 provided with means for keeping the spring 2 fixed at one of its ends. For example, this end of the shaft 30 may be provided with magnetic properties such as to retain the spring 2 in position, if it is made of metal. The support 3 can be interchangeable, i.e. the instrument 1 can be provided with a kit of interchangeable supports suitable for supporting springs (or, in general, shaped wire objects) of different shapes.

The support 3 is preferably rotatably fixed to the support plane 6, so as to rotatably support the spring 2 through suitable fixing means 31. The rotation of the support 3 preferably takes place so that the spring 2 is rotated (arrow R in Figure 2) about a rotation axis parallel to the vertical axis z. In addition to the rotary movement, the support 3 may be configured to also perform vertical translations along the rotation axis (i.e. perpendicular to the support plane 6) and/or translations along the transverse axis.

The movement of the support 3 may be carried out manually or - preferably - through an electric motor (not shown in the drawings).

The image acquisition system 4 preferably comprises at least two image acquisition devices 41, 42. Each image acquisition device 41, 42 preferably comprises a respective digital camera or any other device suitable for providing a digital image (or a sequence of digital images) of what is present in its field of view.

According to an advantageous embodiment, the image acquisition devices 41, 42 are provided with telecentric objectives. This advantageously allows to provide a parallel and non-perspective view of the spring 2, and moreover simplifies the calculations and the calibration of the instrument 1.

The image acquisition devices 41, 42 are arranged with optical axes A1, A2 not parallel to each other. For example, a device 41 can be arranged with its optical axis A1 parallel to the support plane 6, in particular to the longitudinal axis x. The other device 42 is instead preferably arranged with its optical axis A2 inclined with respect to the support plane 6, so as to form an angle α with the optical axis A1. The axis A2 may, for example, be parallel to the plane xz. The angle α that the axis A2 forms with the axis A1 is greater than 0° and less than 90°. Preferably, the angle α is between 35° and 55°, for example 45°. This preferred interval advantageously allows to maximize the information on the shape of the spring 2 which is collected overall by the image acquisition devices 41, 42.

Preferably, the image acquisition system 4 also comprises at least two illuminators 43, 44. Each of the illuminators 43, 44 is preferably positioned on the optical axis A1, A2 of a respective image acquisition device 41, 42, so that the support 3 is in an intermediate position between each image acquisition device 41, 42 and the respective illuminator 43, 44. As will be described in greater detail hereinafter, in this configuration each illuminator 43, 44 basically backlights the support 3 and the spring 2. The backlight advantageously allows to obtain particularly accurate and precise results, which would not be obtainable for example by using laser scanners.

The illuminators 43, 44 are preferably collimated illuminators and the light rays generated by each illuminator 43, 44 are parallel to the optical axis A1, A2 of the respective image acquisition device 41,42. In this way, it is avoided that the backlight generates reflections on the surface of the spring 2 which can reduce the sharpness of the acquired images.

According to a particularly advantageous variant, the illuminators 43, 44 are of different colors. In this way, by providing the image acquisition devices 41, 42 with suitable filters, it is possible to minimize the reflection that each illuminator 43, 44 produces on the image acquired by the other device 42, 41. The same advantageous effect could be obtained by operating a pair of image acquisition device - illuminator at a time.

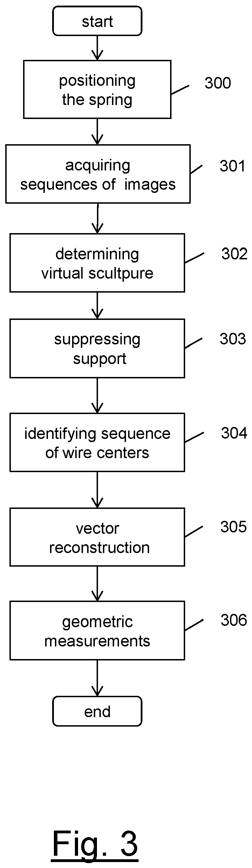

The data processing unit 5 is preferably provided with a display 5a and is connected to the data acquisition devices 41, 42, so as to receive the digital images of the spring 2 which they acquire. The data processing unit 5 further comprises a processor (not shown in the drawings) which executes a computer program which, when executed by the processor, processes the received digital images and generates a measurement of the spring 2 therefrom, as will be described in detail below with reference to the flowchart of Figure 3.

In order to start the measurement, the spring 2 is first positioned within the instrument 1, i.e. it is fixed to the support 3 (step 300). The spring 2 can be fixed to the support 3 in any orientation or position (of course provided it falls within the field of view of both image acquisition devices 41, 42). If the spring 2 has a conical, cylindrical or spiral winding, it is preferably positioned so that the axis of the winding is parallel to the optical axis A1 or A2 of one of the two image acquisition devices 41 or 42. This advantageously allows an optimum reconstruction of the shape of the winding of the spring 2.

Then, a first step of acquiring a sequence of images of the spring 2 is performed by each of the image acquisition devices 41,42 (step 301).

In order to carry out this step, the support 3 is rotated manually or by means of an electric motor. The movement can be continuous or step by step. During rotation of the support 3, the illuminators 43, 44 backlight the spring 2. As the backlit spring 2 rotates on the support 3, each of the two image acquisition devices 41,42 acquires a respective sequence of images of the spring 2, i.e. of images of the shadow of the spring 2 produced by its backlight. Each sequence of images comprises an image for each rotation angle θ of the support 3 (hereinafter also referred to as "acquisition angle"). Preferably, each device 41, 42 acquires a respective image every N degrees of rotation, where N is between 1° and 20°, preferably between 2° and 10°, for example between 3° and 5°.

The acquisition of the images of the spring 2 ends when the support 3 has reached an acquisition angle θ = 360°, i.e. it has returned substantially to its starting position.

Each acquired image is preferably sent to the data processing unit 5 together with the respective value of the acquisition angle θ. The data processing unit 5 then saves each sequence of images in its memory, together with the respective acquisition angles θ and the identifier of the device 41 or 42 which acquired it.

Thus, the data processing unit 5 preferably processes the two images received to determine a virtual sculpture of the spring 2 (step 302).

In order to determine the virtual sculpture, the data processing unit 5 preferably starts from an initial volume V0, on the basis of the acquired images it identifies the portions of this initial volume V0 in which no part of the spring 2 is present and it eliminates these portions from the initial volume V0. What remains of the initial volume V0 at the end of these deletions is the virtual sculpture of the spring 2, which is therefore a shaped three-dimensional volume which certainly contains the spring 2, whatever its shape.

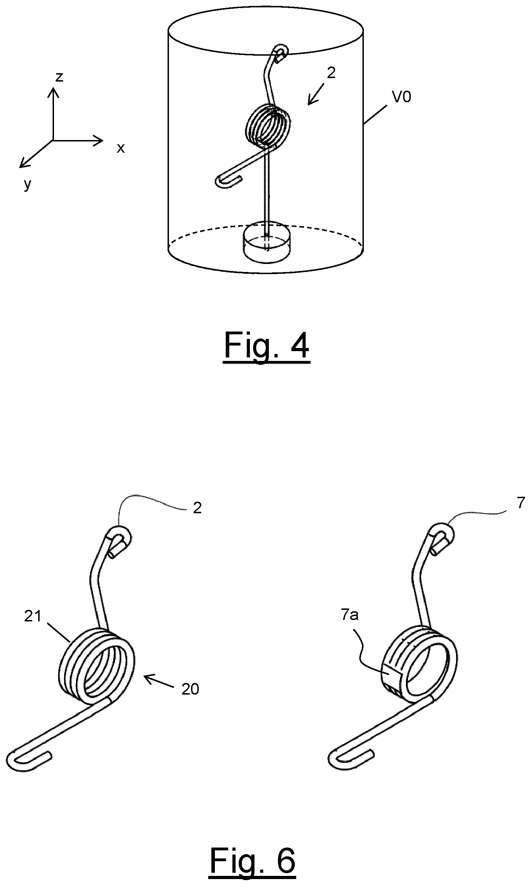

Preferably, the initial volume V0 corresponds to the three-dimensional measurement space of the instrument 1, i.e. to the three-dimensional field of view of the image acquisition system 4. The shape and size of the initial volume V0 therefore depends on the shape and size of the field of view of at least one of the image acquisition devices 41, 42. For example, the initial volume V0 may be defined as the cylindrical space obtained by the rotation of the field of view of the device 41 (which is substantially a rectangular or square area perpendicular to the optical axis A1 of the device 41) about the axis of rotation of the support 3, as shown in Figure 4. From the computational point of view, the initial volume V0 is a three-dimensional cloud of points, in which each point has associated a set of three coordinates (for example in the Cartesian reference system xyz).

Once the initial volume V0 has been defined, at step 302 the data processing unit 5 identifies, on the basis of the acquired images, the portions of this initial volume V0 in which no part of the spring 2 is present and eliminates these portions from the initial volume V0. In particular, the processing unit 5 preferably considers each pair of images acquired at a certain acquisition angle θ and, knowing the value of the angle θ and the position of the devices 41, 42 (in particular the inclination of their optical axes A1, A2 with respect to the axis of rotation xy of the support 3), eliminates from the initial volume V0 the union of the volumes complementary to the volumes obtained as projections of the two images through the initial volume V0 along the optical axes A1 and A2 respectively.

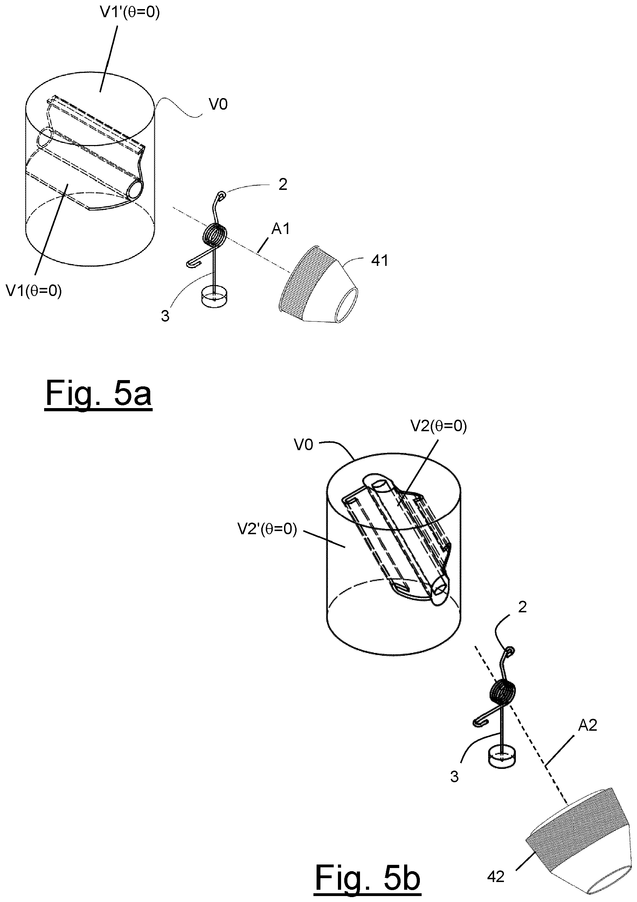

For example, Figure 5a relates to the image of the spring 2 that the device 41 acquires at the acquisition angle θ=0. The data processing unit 5 preferably determines the projection V1(θ=0) along the optical axis A1 of the image through the volume V0, by translating the acquired image along the optical axis A1 through the entire volume V0. At least a part of such projection V1(θ=0) comprises the spring 2, while the volume complementary thereto V1'(θ=0) certainly does not comprise any part of the spring 2.

Figure 5b, on the other hand, refers to the image of the spring 2 which the other device 42 acquires at the acquisition angle θ=0. The data processing unit 5 preferably determines the projection V2(θ=0) along the optical axis A2 of the image through the volume V0, by translating the acquired image along the optical axis A2 through the entire volume V0. At least part of such projection V2(θ=0) comprises the spring 2, while the volume complementary thereto V2'(θ=0) certainly does not comprise any part of the spring 2.

The data processing unit 5 then preferably joins the two volumes V1'(θ=0) and V2'(θ=0) and eliminates their union from the initial volume V0. This operation consists in the elimination, from the three-dimensional cloud of points corresponding to the volume V0, of the points which are part of the union of the volumes V1 '(θ=0) and V2'(θ=0), i.e. of the points which are part of the volume V1'(θ=0) and/or of the volume V2'(θ=0).

The data processing unit 5 preferably repeats the above operations for each acquisition angle θ. At each iteration, then, from the volume V0 (or better, from the part of the volume V0 remaining following the previous iterations) the union of the two volumes V1'(θ) and V2'(θ) complementary to the two projections V1(θ) and V2(θ) is eliminated by translating the two images acquired at the acquisition angle θ of the current iteration along the respective optical axes A1 and A2. Before carrying out the elimination, the volume V0 (or rather, the part of the volume V0 remaining following the previous iterations) is preferably rotated numerically by -N degrees or, correspondingly, the volumes V1'(θ) and V2'(0) are rotated numerically by + N degrees.

According to an advantageous variant, the processing of each pair of images in order to determine the virtual sculpture can be performed immediately after its acquisition, without waiting for the support 3 to complete its rotation and for the two entire sequences of images to be acquired. This advantageously makes the measurement process of the spring 2 faster and moreover allows a saving in terms of memory, since it is not necessary to provide in the data processing unit 5 a memory space suitable to contain the two entire sequences of acquired images.

Once the operation for each acquisition angle θ has been completed, the data processing unit 5 thus obtains the virtual sculpture of the spring 2. This virtual sculpture can be displayed on the display 5a of the data processing unit 5. The virtual sculpture in practice has a shape corresponding to that of the spring 2, with the following differences:
i. resolution/definition limited by the properties of the image acquisition system 4 (for example optical resolution of the devices 41 and 42 and angular resolution, i.e. difference N between consecutive acquisition angles θ) and the processing capacity of the data processing unit 5; and
ii. presence of possible shadow zones, or regions of the spring 2 whose contour is not detected at any rotation angle θ of the support 3.

As to point ii, Figure 6 shows an exemplary comparison between the spring 2 and its virtual sculpture 7 obtained following the execution of step 302. As described above, the spring 2 comprises a cylindrical winding 20 formed by a number of adjacent coils 21 (solid coils). Since there is substantially no space between the coils 21, in the virtual sculpture 7 the inner surface of the coils will be smooth, instead of reproducing their actual shape. Moreover, there is a shadow region 7a also in the portion of the spring 2 in which the wire is arranged substantially parallel to the rotation axis of the support 3.

Following step 302, the data processing unit 5 preferably performs a step of suppressing the support 3 from the virtual sculpture 7 (step 303). This step provides for eliminating from the virtual sculpture 7 the points corresponding to the support 3. Such points are preferably determined before the process of measuring the spring 2 is started, by performing steps similar to the steps 301 and 302 described above in the presence of the support 3 alone, without any spring attached thereto. A virtual sculpture of the support 3 alone is thus obtained, which may be stored in the data processing unit 5 for subsequent use. In the case of a kit of interchangeable supports, it is possible to reconstruct a virtual sculpture for each of them and to store all the virtual sculptures obtained in the data processing unit 5. In this case, it will be necessary to select the virtual sculpture to be used at step 303. At step 303, the points corresponding to the virtual sculpture of the support 3 alone are then eliminated from the virtual sculpture 7.

In order that step 303 does not introduce errors in the reconstruction of the shape of the spring 2, it is preferable that the support 3 does not have blind holes or parts which are not visible during its rotation. For this reason it is preferable that the support 3 has a cylindrical shape and that its transverse size (i.e. parallel to the plane of rotation xy) is as small as possible, preferably less than 10 mm (for example 8 mm), more preferably less than 5 mm (for example 3 mm or 4 mm), so as to minimize the obscuration of the devices 41 and 42.

Then, the data processing unit 5 preferably identifies in the virtual sculpture 7 (from which the support 3 has been removed) a sequence of wire centers representative of the path that the shaped wire follows to form the spring 2 (step 304).

Step 304 requires a knowledge of the shape of the cross-section of the wire (preferably circular) and its diameter D. This diameter D can be known a priori, or it can be measured from one of the images acquired by the device 41 or 42 in which an isolated segment of wire is clearly visible. It is assumed that the diameter D of the cross-section of the wire is constant along its entire path, even at bends and folds.

At step 304 the resolution R is first set for the reconstruction of the sequence of the wire centers. This resolution R, which corresponds to the distance between each pair of consecutive wire centers in the sequence, corresponds to the precision with which the wire path will be reconstructed. It is then selected in an interval which on the one hand allows a sufficiently accurate reconstruction and which on the other hand is compatible with the computing capacity of the data processing unit 5. For example, considering that the minimum bending radius of the wire is generally 2xD, the resolution R may be between D/5 and D.

Once the diameter D and the resolution R have been established, the data processing unit 5 preferably identifies within the virtual sculpture 7 an initial wire center P0. This initial wire center P0 preferably corresponds to a point of the spring 2 in which the wire is isolated (i.e. it is not in contact with other points of the wire), so as to be well identifiable within the virtual sculpture 7. In the case of the exemplary spring 2 and its virtual sculpture 7 shown in the drawings, for example, the initial wire center P0 may be positioned in the portion of the virtual sculpture 7 that corresponds to one of the stems 22, 23 of the spring 2.

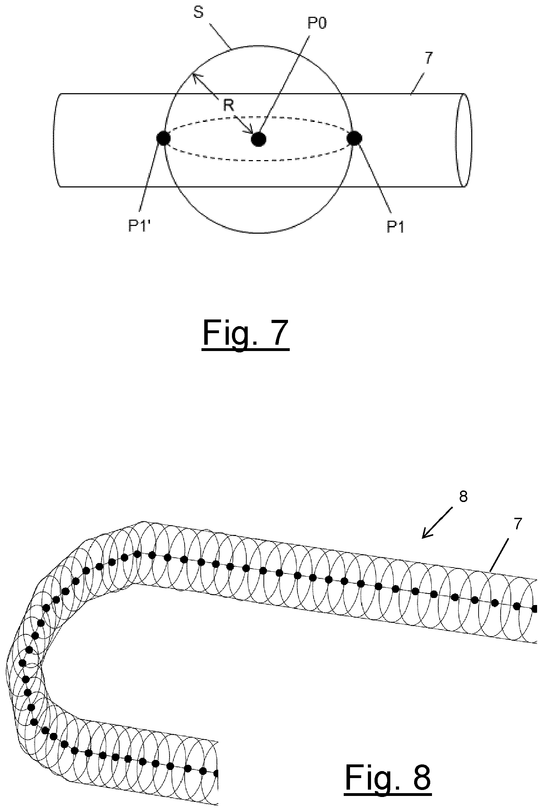

Once the initial wire center P0 has been identified, the data processing unit 5 preferably identifies the two wire centers adjacent thereto P1 and P1' in the two opposite directions of the wire path. For this purpose, the data processing unit 5 preferably considers a sphere S of diameter R and center in P0, as shown schematically in Figure 7. The two wire centers P1 and P1' are then determined as the two points of intersection between the sphere S and the virtual sculpture 7 (i.e. of the set of points belonging to both the sphere S and the virtual sculpture 7) which satisfy the following conditions:
(i) their minimum distance from the outside of the virtual sculpture 7 is approximately equal to D/2; and
(ii) they are located on substantially opposite sides of the sphere S with respect to the initial wire center P0, so as to continue the path of the wire in substantially opposite directions. The wire centers P1 and P1' may be not exactly opposite in case the initial wire center P0 is along a bend of the wire. For example, to check that P1 and P1' are on substantially opposite sides of the sphere S, it is possible to check that their mutual distance is greater than a minimum threshold, which depends on the minimum bending radius assumed for the wire. This minimum threshold can be established empirically and for example may be D/2 or 2D/3.

In case several points of the intersection between the sphere S and the virtual sculpture 7 satisfy the conditions (i) and (ii), the point furthest from the wire center determined at the penultimate iteration is considered as new wire center P1 or P1'. This situation can for example occur at shadow zones of the virtual sculpture 7 which represent winding sections with adjacent coils, such as for example the shadow zone 7a shown in Figure 6.

Once the wire centers P1 and P1' have been identified, the data processing unit 5 preferably identifies the successive wire centers P2 and P2', respectively adjacent to the wire centers P1 and P1' on the side opposite to P0. For this purpose, the data processing unit 5 preferably considers two further spheres of diameter R having centers in P1 and P1' respectively. The wire centers P2 and P2' are then identified as the two points of the intersections between each sphere and the virtual sculpture 7 which satisfy the above condition (i) and which are substantially on the opposite side of the respective sphere with respect to the initial wire center P0. As described above, this latter condition must be considered with a certain tolerance, which takes into account any bends and turns of the wire.

These operations are then iterated again, so as to determine the wire centers P3 and P3', P4 and P4' and so on. In practice, by iterating these operations, the data processing unit 5 proceeds within a sort of "virtual tunnel" constituted by the outer surface of the virtual sculpture 7, moving in steps of length R, remaining as far as possible from the walls of the tunnel and moving ever further away from the starting point P0. The data processing unit 5 thus reconstructs a sequence of wire centers 8 which represents the path that the shaped wire follows to form the spring 2, as shown in Figure 8.

The determination of the wire centers continues in each of the two directions until one of the following conditions occurs:
- the intersection between the virtual sculpture 7 and the last sphere considered does not comprise any point whose distance from the penultimate identified wire center is greater than the above-mentioned minimum threshold (for example of D/2 or 2D/3); or
- the last determined wire center is too close to the outside of the virtual sculpture 7, i.e. its minimum distance from the outside of the virtual sculpture 7 is smaller than the radius D/2 of the wire.

When one of these two conditions occurs, the data processing unit 5 determines that it has reached one end of the wire.

It should be noted that the above-described method for identifying the sequence of the wire centers also operates in the case where the spring 2 has a winding of adjacent coils.

Returning to the flowchart of FIG. 3, preferably the data processing unit 5 then performs a vector reconstruction of the spring 2 (step 305). This operation substantially consists in identifying, in the sequence of wire centers identified in the previous step 304, sets of consecutive wire centers which correspond to:
- straight portions of the wire;
- windings with one or more coils of wire; or
- bends of the wire, which may be of constant radius or of variable radius.

As regards the straight portions of the wire, the data processing unit 5 preferably concludes that a certain set of consecutive wire centers corresponds to a straight portion if the coordinates of these wire centers lie substantially on a same straight line.

Preferably, the search for straight sections proceeds in an iterative way, starting from a set of a few consecutive wire centers (2-4) and trying to progressively add contiguous wire centers on each side. At each iteration the linear regression line of the set of wire centers considered is preferably calculated and the distance of the wire centers from this straight line is calculated (for example using the minimum square method). If this distance is substantially zero or in any case less than a certain threshold, a new iteration is carried out by adding new contiguous wire centers. If, on the other hand, the distance is greater than the threshold, it is concluded that on the side considered the rectilinear segment has ended at the previous iteration. The threshold allows to evaluate the rectilinear segments with a certain tolerance, due to the resolution of the instrument, to possible calculation errors and to the presence of possible noise factors such as dirt, reflections, etc. The threshold preferably depends on the diameter D of the cross-section of the wire and may for example be equal to D/10. When a straight portion is identified, the data processing unit 5 preferably determines the segment that represents it, defined by the coordinates of its ends.

As far as the windings are concerned, as is known, they are formed by a portion of wire which rotates about an axis, forming two or more coils. If the radius is constant, the winding is cylindrical. If, on the other hand, the radius is increasing or decreasing, the winding is conical. The coils may be in contact with each other (solid coils) or have a certain mutual distance (also called "pitch"). The pitch can be constant or variable. A particular type of winding is the spiral, formed by a portion of wire which rotates in a plane around a point, with a radius increasing as it moves away from the point.

The data processing unit 5 preferably concludes that a certain set of consecutive wire centers corresponds to a winding (for example, a cylindrical winding) if the coordinates of these wire centers lie substantially at the same distance from a straight line. If instead the wire centers have an increasing distance from a point and are substantially on a same plane, the data processing unit 5 preferably concludes that the set of wire centers corresponds to a spiral winding.

When a winding is identified, the data processing unit 5 preferably determines the geometric curve that represents it (i.e. helix in case of cylindrical winding, or archimedean spiral in case of spiral winding), defined by a certain set of geometric parameters which depend on the type of curve. In the case of a cylindrical winding, for example, the set of geometric parameters defining the portion of helix that represents it comprises the axis of the helix, the pitch of the helix, the radius of the helix and the coordinates of the ends of the helix.

Preferably, at step 305 the possible rectilinear portions and then the possible windings are identified first. Each set of adjacent wire centers corresponding to a straight section is preferably replaced by the segment describing it, while each set of adjacent wire centers corresponding to a winding is preferably replaced by the geometric curve (helix or spiral section) describing it.

Any remaining sets of consecutive wire centers are preferably considered as bends of the wire. Preferably, the data processing unit 5 checks for each of them whether it is possible to determine a constant radius of curvature. If so, the set of adjacent wire centers corresponding to the constant radius bend is preferably replaced with an arc defined by the radius itself and the coordinates of its ends.

Any remaining sets of consecutive wire centers are preferably considered as generic non-straight wire lengths of irregular shape and are then replaced by a broken line formed by two or more adjacent segments. Such segments are preferably of such length that the angles formed by each pair of adjacent segments are not greater than a maximum value comprised between 5° and 15°. The coordinates of these segments that form the broken line are determined.

At the end of step 305, a vector reconstruction of the spring 2 is thus obtained, which substantially consists of a set of segments and/or geometric curves (helical or spiral sections, arcs, broken lines) connected to each other in a contiguous manner, so as to represent the shape of the spring 2 in the three-dimensional space. Around the line representing such segments and/or geometric curves is drawn the body of the wire, whose diameter in cross-section has been measured previously as described above.

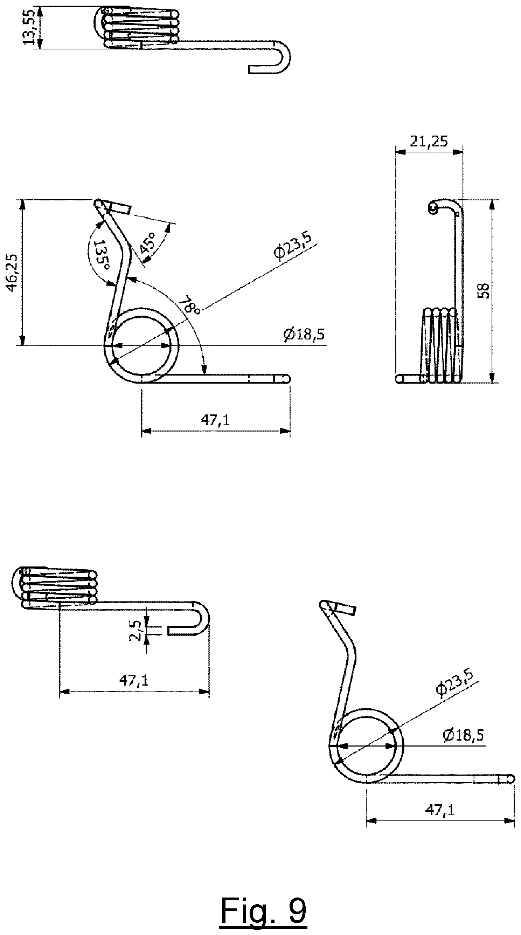

Thus, based on this vector reconstruction of the spring 2, the data processing unit 5 preferably provides the measurement of one or more geometric parameters of the spring 2 (step 306). The number of measurement parameters and the type of measurement parameters depend on the shape of the spring 2. For example, in the example of the spring 2 (torsion cylindrical), it is possible to measure the length of the winding, its inner and outer diameter, the pitch of the turns or other parameters relating to the legs or ends 22 and 23 of the spring (their length, the angles they form, etc.). Figure 9 shows exemplary measurements that can be performed automatically by the data processing unit 5 on the vector representation of the spring 2.

At step 306, the measurements obtained can be shown on the display 5a of the data processing unit 5 in the form of one or more two-dimensional drawings, as shown in Figure 9. The two-dimensional drawings, together with the vector reconstruction of the spring 2, may be saved in the memory of the data processing unit 5.

The instrument 1 is therefore advantageously capable of reconstructing the shape of any spring or, in general, of any two-dimensional or three-dimensional shaped wire object, independently of its shape. Under the condition that a support is provided which is capable of rotatably supporting the object, neither the acquisition of the images nor their subsequent processing indeed presuppose any constraint on the shape of the object. The image acquisition system 4 with two (or more) devices 41,42 with optical axes A1, A2 not parallel to each other actually allows to provide sequences of images that allow the virtual sculpture of the object to be reconstructed without any constraint on its shape. The search for the sequence of the wire centers - which substantially represents the path of the wire, therefore the shape of the object - is thus limited in the three-dimensional space to the virtual sculpture alone, namely portions of the three-dimensional space in which the object is certainly not found are excluded from the search. This makes the determination of the sequence of the wire centers computational and accurate.

## Claims

1. Instrument (1) for measuring an object made of a shaped wire (2), said instrument (1) comprising:
- a rotatable support (3) suitable for rotatably supporting said object made of a shaped wire (2);
- an image acquisition system (4) comprising at least two image acquisition devices (41, 42) whose optical axes (A1, A2) are not parallel to each other, each one of said at least two image acquisition devices (41, 42) being configured to acquire a respective sequence of images of said object (2) at different rotation angles (θ) of said rotatable support (3); and
- a data processing unit (5) configured to:
- reconstruct a virtual sculpture (7) of said object (2) by:
(i) defining an initial volume (V0) as a three-dimensional point cloud, in which each point has associated a set of three coordinates;
(ii) determining a volume portion (V1'(θ=0), V2'(θ=0)) in which said object (2) is not present by considering at least two images of said object made of said shaped wire (2) acquired by said at least two image acquisition devices (41, 42) at a same rotation angle (θ) and determining the projections (V1(θ=0), V2(θ=0)) of said at least two images through said initial volume (V0) along the optical axes (A1, A2) of the respective image acquisition devices (41, 42), said volume (V1'(θ=0), V2'(θ=0)) in which said object (2) is not present being the volume complementary to the union of said projections (V1(θ=0), V2(θ=0));
(iii) subtracting from said initial volume (V0) said volume portion (V1'(θ=0), V2'(θ=0)) in which said object (2) is not present
(iv) repeating the above operations for each acquisition angle θ, wherein at each iteration, the initial volume corresponds to the volume V0 that remains as a result of the previous iteration; and
- identify in said virtual sculpture (7) a sequence of wire centers (8) representative of the path that said shaped wire follows to form said object (2).

2. Instrument (1) according to claim 1, wherein the optical axes (A1, A2) of said at least two image acquisition devices (41, 42) form an angle comprised between 35° and 55°.

3. Instrument (1) according to claim 1 or 2, wherein said image acquisition system (4) also comprises at least two illuminators (43, 44), each of said at least two illuminators (43, 44) being arranged along the optical axis (A1, A2) of a respective image acquisition device (41, 42) so as to backlight said object made of said shaped wire (2).

4. Instrument (1) according to claim 3, wherein said at least two illuminators (43, 44) are of different colors.

5. Instrument (1) according to any one of the preceding claims, wherein said initial volume (V0) has a shape and size that depend on the shape and size of the field of view of at least one of said at least two image acquisition devices (41, 42).

6. Instrument (1) according to any one of the preceding claims, wherein said data processing unit (5) is configured to, once said virtual sculpture (7) is reconstructed, eliminate from said virtual sculpture (7) one or more points which represent said rotatable support (3).

7. Instrument (1) according to any one of the preceding claims, wherein said rotatable support (3) has, in the plane perpendicular to its rotation axis, a maximum size smaller than 10 mm.

8. Instrument (1) according to any one of the preceding claims, wherein said data processing unit (5) is configured to identify said sequence of wire centers (8) in an iterative way, each iteration comprising determining a set of points of said virtual sculpture (7) placed at a predetermined distance R from the wire center (P1) determined at the last iteration and determining a new wire center (P2) as the point of said set which satisfies the conditions:
(i) its minimum distance from the outside of said virtual sculpture (7) is substantially equal to half the diameter of the wire cross-section; and
(ii) its distance from the wire center (P0) determined at the penultimate iteration is greater than a predetermined threshold, the value of which depends on the minimum radius of curvature of said shaped wire.

9. Instrument (1) according to any one of the preceding claims, wherein said data processing unit (5) is further configured to, once identified said sequence of wire centers (8), perform a vector reconstruction of said object made of said shaped wire (2) by identifying in said sequence of wire centers (8) at least one set of adjacent wire centers corresponding to a straight portion of the wire, a winding of the wire or a bend of the wire, and determining a geometric segment or curve which represents said set of adjacent wire centers.

10. Instrument (1) according to claim 9, wherein said data processing unit (5) is further configured to provide one or more geometric measurement parameters of said object made of said shaped wire (2), said parameters being measured on said vector reconstruction of said object made of said shaped wire (2).

11. Method for measuring an object made of a shaped wire (2), said method comprising:
- rotatably supporting said object made of said shaped wire (2);
- acquiring at least two sequences of images of said object (2) at different rotation angles (θ) of said object made of said shaped wire (2), said at least two sequences of images being acquired along at least two optical axes (A1, A2 ) not parallel to each other;
- reconstructing a virtual sculpture (7) of said object (2) by:
(i) defining an initial volume (V0) as a three-dimensional point cloud, in which each point has associated a set of three coordinates;
(ii) determining a volume portion (V1'(θ=0), V2'(θ=0)) in which said object (2) is not present by considering at least two images of said object made of said shaped wire (2) acquired by said at least two image acquisition devices (41, 42) at a same rotation angle (θ) and determining the projections (V1(θ=0), V2(θ=0)) of said at least two images through said initial volume (V0) along the optical axes (A1, A2) of the respective image acquisition devices (41, 42), said volume (V1'(θ=0), V2'(θ=0)) in which said object (2) is not present being the volume complementary to the union of said projections (V1 (θ=0), V2(0=0));
(iii) subtracting from said initial volume (V0) said volume portion (V1'(θ=0), V2'(θ=0)) in which said object (2) is not present;
(iv) repeating the above operations for each acquisition angle θ, wherein at each iteration, the initial volume corresponds to the volume V0 that remains as a result of the previous iteration; and
- identifying in said virtual sculpture (7) a sequence of wire centers (8) representative of the path that said shaped wire follows to form said object (2).

## Patentansprüche

1. Gerät (1) zum Messen eines aus einem geformten Draht hergestellten Objekts (2), wobei das Gerät (1) umfasst:
- einen drehbaren Träger (3), der geeignet ist, das aus einem geformten Draht hergestellt Objekt (2) drehbar zu tragen;
- ein Bilderfassungssystem (4), das mindestens zwei Bilderfassungsvorrichtungen (41, 42) aufweist, deren optische Achsen (A1, A2) nicht parallel zueinander sind, wobei jede der mindestens zwei Bilderfassungsvorrichtungen (41, 42) konfiguriert ist, um eine entsprechende Folge von Bildern des Objekts (2) bei unterschiedlichen Drehwinkeln (Θ) des drehbaren Trägers (3) zu erfassen; und
- eine Datenverarbeitungseinheit (5), die konfiguriert ist, um:
- eine virtuelle Skulptur (7) des Objekts (2) zu rekonstruieren, durch:
(i) Definieren eines anfänglichen Volumens (V0) als eine dreidimensionale Punktwolke, in der jedem Punkt ein Satz von drei Koordinaten zugeordnet ist,
(ii) Bestimmen eines Volumenanteils (V1'(Θ =0), V2'(Θ =0)), in dem das Objekt (2) nicht vorhanden ist, durch die Betrachtung von mindestens zwei Bilder des aus dem geformten Draht hergestellten Objekts (2), die von den mindestens zwei Bilderfassungsvorrichtungen (41, 42) bei einem gleichen Drehwinkel (Θ) erfasst wurden, und die Bestimmung der Projektionen (V1(Θ =0), V2(Θ =0)) der mindestens zwei Bilder durch das Ausgangsvolumen (V0) entlang der optischen Achsen (A1, A2) der jeweiligen Bilderfassungsvorrichtungen (41, 42), wobei das Volumen (V1'(Θ =0), V2'(Θ =0)), in dem das Objekt (2) nicht vorhanden ist, das zu der Vereinigung der Projektionen (V1(Θ =0, V2(Θ =0)) komplementäre Volumen ist;
(iii) Subtrahieren des Volumenanteils (V1'(Θ =0), V2'(Θ =0)) von dem Ausgangsvolumen (V0), in dem das Objekt (2) nicht vorhanden ist;
(iv) Wiederholen der obigen Vorgänge für jeden Erfassungswinkel Θ, wobei bei jeder Iteration das Ausgangsvolumen dem Volumen V0 entspricht, das als Ergebnis der vorherigen Iteration verbleibt; und
- Identifizieren einer Folge von Drahtmittelpunkten (8) in der virtuellen Skulptur (7), die für den Weg repräsentativ sind, dem der geformte Draht folgt, um das Objekt (2) zu formen.

2. Gerät (1) nach Anspruch 1, wobei die optischen Achsen (A1, A2) der mindestens zwei Bilderfassungsvorrichtungen (41, 42) einen Winkel bilden, der zwischen 35° und 55° beträgt.

3. Gerät (1) nach Anspruch 1 oder 2, wobei das Bilderfassungssystem (4) auch mindestens zwei Beleuchtungseinrichtungen (43, 44) umfasst, wobei jede der mindestens zwei Beleuchtungseinrichtungen (43, 44) entlang der optischen Achse (A1, A2) von jeweils einer Bilderfassungsvorrichtungen (41, 42) angeordnet ist, um den Hintergrund des aus dem geformten Draht hergestellten Objekts (2) zu beleuchten.

4. Gerät (1) nach Anspruch 3, wobei die mindestens zwei Beleuchtungseinrichtungen (43, 44) unterschiedliche Farben haben.

5. Gerät (1) nach einem der vorhergehenden Ansprüche, wobei das Ausgangsvolumen (V0) eine Form und Größe aufweist, die von der Form und der Größe des Sichtfeldes von mindestens einer der mindestens zwei Bilderfassungsvorrichtungen (41, 42) abhängt.

6. Gerät (1) nach einem der vorhergehenden Ansprüche, wobei die Datenverarbeitungseinheit (5) konfiguriert ist, um, sobald die virtuelle Skulptur (7) rekonstruiert ist, aus der virtuellen Skulptur (7) einen Punkt oder mehrere Punkte zu eliminieren, die den drehbaren Träger (3) darstellt bzw. darstellen.

7. Gerät (1) nach einem der vorhergehenden Ansprüche, wobei der drehbare Träger (3) in der Ebene senkrecht zu seiner Drehachse eine maximale Größe von weniger als 10 mm aufweist.

8. Gerät (1) nach einem der vorangehenden Ansprüche, wobei die Datenverarbeitungseinheit (5) konfiguriert ist, um die Folge von Drahtmittelpunkten (8) in einer iterativen Weise zu identifizieren, wobei jede Iteration das Bestimmen eines Satzes von Punkten der virtuellen Skulptur (7) umfasst, die in einem vorbestimmten Abstand R von dem Drahtmittelpunkt (P1) angeordnet ist, der bei der letzten Iteration bestimmt wurde, und die Bestimmung eines neuen Drahtmittelpunkts (P2) als den Punkt des Satzes, der die Bedingungen erfüllt, dass:
(i) sein minimaler Abstand von der Außenseite der virtuellen Skulptur (7) im Wesentlichen gleich dem halben Durchmesser des Drahtquerschnitts ist; und
(ii) sein Abstand von der bei der vorletzten Iteration ermittelten Drahtmitte (P0) größer als ein vorbestimmter Schwellenwert ist, dessen Wert von dem minimalen Krümmungsradius des geformten Drahtes abhängt.

9. Gerät (1) nach einem der vorhergehenden Ansprüche, wobei die Datenverarbeitungseinheit (5) ferner konfiguriert ist, um, nach der Identifizierung der Folge von Drahtmittelpunkten (8), eine Vektor-Rekonstruktion des aus dem geformten Draht hergestellten Objekts (2) auszuführen, durch die Identifizierung in der Folge von Drahtmittelpunkten (8) mindestens eines Satzes benachbarter Drahtmittelpunkten, der einem geraden Abschnitt des Drahtes, einer Windung des Drahtes oder einer Biegung des Drahtes entspricht, und das Bestimmen eines geometrischen Segments oder einer Kurve, die den Satz von benachbarten Drahtmittelpunkten darstellt.

10. Gerät (1) nach Anspruch 9, wobei die Datenverarbeitungseinheit (5) ferner konfiguriert ist, um einen geometrischen oder mehrere geometrische Messparameter des aus dem geformten Draht hergestellten Objekts (2) bereitzustellen, wobei die Parameter an der Vektor-Rekonstruktion des aus dem geformten Draht hergestellten Objekts (2) gemessen wurden.

11. Verfahren zum Messen eines aus einem geformten Draht hergestellten Objekts (2), wobei das Verfahren umfasst:
- drehbares Lagern des aus dem geformten Draht hergestellten Objekts (2);
- Erfassen von mindestens zwei Bilderfolgen des Objekts (2) bei verschiedenen Drehwinkeln (Θ) des aus dem geformten Draht hergestellten Objekts (2), wobei die mindestens zwei Bilderfolgen entlang mindestens zweier nicht zueinander paralleler, optischer Achsen (A1, A2) erfasst wurden;
- Rekonstruieren einer virtuellen Skulptur (7) des Objekts (2) durch:
(i) Definieren eines Anfangsvolumens (V0) als dreidimensionale Punktwolke, in der jedem Punkt ein Satz von drei Koordinaten zugeordnet wurde;
(ii) Bestimmen eines Volumenanteils (V1'(Θ =0), V2'(Θ =0)), in dem das Objekt (2) nicht vorhanden ist, durch das Berücksichtigen mindestens zwei Bilder des aus dem geformten Draht hergestellten Objekts (2), die von den mindestens zwei Bilderfassungsvorrichtungen (41, 42) bei einem gleichen Drehwinkel (Θ) erfasst wurden, und das Bestimmen der Projektionen (V1(Θ =0), V2(Θ =0)) der mindestens zwei Bilder durch das Ausgangsvolumen (V0) entlang der optischen Achsen (A1, A2) der jeweiligen Bilderfassungsvorrichtungen (41, 42), wobei das Volumen (V1'(Θ =0), V2'(Θ =0)), in dem das Objekt (2) nicht vorhanden ist, das komplementäre Volumen zur Vereinigung der Projektionen (V1(Θ=0), V2(Θ =0)) ist;
(iii) Subtrahieren des Volumenanteils (V1'(Θ =0) V2'(Θ =0)),) von dem Ausgangsvolumen (V0), in dem das Objekt (2) nicht vorhanden ist;
(iv) Wiederholen der obigen Vorgänge für jeden Erfassungswinkel Θ, wobei bei jeder Iteration das Ausgangsvolumen dem Volumen V0 entspricht, das als Ergebnis der vorangegangenen Iteration verbleibt; und
- Identifizieren einer Folge von Drahtmittelpunkten (8) in der virtuellen Skulptur (7), die für den Weg repräsentativ sind, dem der geformte Draht folgt, um das Objekt (2) zu formen.

## Revendications

1. Instrument (1) pour mesurer un objet constitué d'un fil façonné (2), ledit instrument (1) comprenant :
- un support rotatif (3) adapté pour supporter en rotation ledit objet constitué d'un fil façonné (2) ;
- un système d'acquisition d'images (4) comprenant au moins deux dispositifs d'acquisition d'images (41, 42) dont les axes optiques (A1, A2) ne sont pas parallèles l'un à l'autre, chacun desdits au moins deux dispositifs d'acquisition d'images (41, 42) étant configuré pour acquérir une séquence respective d'images dudit objet (2) à des angles de rotation (θ) différents dudit support rotatif (3) ; et
- une unité de traitement de données (5) configurée pour :
- reconstruire une sculpture virtuelle (7) dudit objet (2) en :
(i) définissant un volume initial (V0) comme un nuage de points tridimensionnel, dans lequel chaque point est associé à un ensemble de trois coordonnées ;
(ii) déterminant une partie volume (V1' (θ=0), V2' (θ=0)) dans laquelle ledit objet (2) n'est pas présent en considérant au moins deux images dudit objet constitué dudit fil façonné (2) acquises par lesdits au moins deux dispositifs d'acquisition d'images (41, 42) à un même angle de rotation (θ) et en déterminant les projections (V1 (θ=0), V2 (θ=0)) desdites au moins deux images à travers ledit volume initial (V0) le long des axes optiques (A1, A2) des dispositifs d'acquisition d'images (41, 42) respectifs, ledit volume (V1' (θ=0), V2' (θ=0)) dans lequel ledit objet (2) n'est pas présent étant le volume complémentaire de l'union desdites projections ((V1 (θ=0), V2 (θ=0)) ;
(iii) soustrayant dudit volume initial (V0) ladite partie volume (V1' (θ=0), V2' (θ=0)) dans laquelle ledit objet (2) n'est pas présent
(iv) répétant les opérations ci-dessus pour chaque angle d'acquisition θ, dans lequel à chaque itération, le volume initial correspond au volume V0 qui reste à la suite de l'itération précédente ; et
- identifier dans ladite sculpture virtuelle (7) une séquence de centres de fil (8) représentatifs du trajet que suit ledit fil façonné pour former ledit objet (2).

2. Instrument (1) selon la revendication 1, dans lequel les axes optiques (A1, A2) desdits au moins deux dispositifs d'acquisition d'images (41, 42) forment un angle compris entre 35° et 55°.

3. Instrument (1) selon la revendication 1 ou 2, dans lequel ledit système d'acquisition d'images (4) comprend également au moins deux illuminateurs (43, 44), chacun desdits au moins deux illuminateurs (43, 44) étant agencé le long de l'axe optique (A1, A2) d'un dispositif d'acquisition d'images (41, 42) respectif de sorte à rétroéclairer ledit objet constitué dudit fil façonné (2).

4. Instrument (1) selon la revendication 3, dans lequel lesdits au moins deux illuminateurs (43, 44) sont de couleurs différentes.

5. Instrument (1) selon l'une quelconque des revendications précédentes, dans lequel ledit volume initial (V0) a une forme et une taille qui dépendent de la forme et de la taille du champ de vision d'au moins l'un desdits au moins deux dispositifs d'acquisition d'images (41, 42).

6. Instrument (1) selon l'une quelconque des revendications précédentes, dans lequel ladite unité de traitement de données (5) est configurée, une fois que ladite sculpture virtuelle (7) est reconstruite, pour éliminer de ladite sculpture virtuelle (7) un ou plusieurs points qui représentent ledit support rotatif (3).

7. Instrument (1) selon l'une quelconque des revendications précédentes, dans lequel ledit support rotatif (3) a, dans le plan perpendiculaire à son axe de rotation, une taille maximale inférieure à 10 mm.

8. Instrument (1) selon l'une quelconque des revendications précédentes, dans lequel ladite unité de traitement de données (5) est configurée pour identifier ladite séquence de centres de fil (8) de manière itérative, chaque itération comprenant la détermination d'un ensemble de points de ladite sculpture virtuelle (7) placé à une distance prédéterminée R du centre de fil (P1) déterminée au moment de la dernière itération et la détermination d'un nouveau centre de fil (P2) comme point dudit ensemble qui satisfait les conditions suivantes :
(i) sa distance minimale depuis l'extérieur de ladite sculpture virtuelle (7) est sensiblement égale à la moitié du diamètre de la section transversale du fil ; et
(ii) sa distance depuis le centre de fil (P0) déterminée au moment de l'avant-dernière itération est supérieure à un seuil prédéterminé, dont la valeur dépend du rayon de courbure minimal dudit fil façonné.

9. Instrument (1) selon l'une quelconque des revendications précédentes, dans lequel ladite unité de traitement de données (5) est en outre configurée pour réaliser, une fois que ladite séquence de centres de fil (8) est identifiée, une reconstruction vectorielle dudit objet constitué dudit fil façonné (2) en identifiant dans ladite séquence de centres de fil (8) au moins un ensemble de centres de fil adjacents correspondant à une partie droite du fil, à un enroulement du fil ou à un coude du fil, et en déterminant un segment ou une courbe géométrique qui représente ledit ensemble de centres de fil adjacents.

10. Instrument (1) selon la revendication 9, dans lequel ladite unité de traitement de données (5) est en outre configurée pour fournir un ou plusieurs paramètres de mesure géométrique dudit objet constitué dudit fil façonné (2), lesdits paramètres étant mesurés sur ladite reconstruction vectorielle dudit objet constitué dudit fil façonné (2).

11. Procédé de mesure d'un objet constitué d'un fil façonné (2), ledit procédé comprenant :
- le support en rotation dudit objet constitué dudit fil façonné (2) ;
- l'acquisition d'au moins deux séquences d'images dudit objet (2) à des angles de rotation (θ) différents dudit objet constitué dudit fil façonné (2), lesdites au moins deux séquences d'images étant acquises le long d'au moins deux axes optiques (A1, A2) non parallèles l'un à l'autre ;
- la reconstruction d'une sculpture virtuelle (7) dudit objet (2) en :
(i) définissant un volume initial (V0) comme un nuage de points tridimensionnel, dans lequel chaque point est associé à un ensemble de trois coordonnées ;
(ii) déterminant une partie volume (V1' (θ=0), V2' (θ=0)) dans laquelle ledit objet (2) n'est pas présent en considérant au moins deux images dudit objet constitué dudit fil façonné (2) acquises par lesdits au moins deux dispositifs d'acquisition d'images (41, 42) à un même angle de rotation (θ) et en déterminant les projections (V1 (θ=0), V2 (θ=0)) desdites au moins deux images à travers ledit volume initial (V0) le long des axes optiques (A1, A2) des dispositifs d'acquisition d'images (41, 42) respectifs, ledit volume (V1' (θ=0), V2' (θ=0)) dans lequel ledit objet (2) n'est pas présent étant le volume complémentaire à l'union desdites projections ((V1 (θ=0), V2 (θ=0)) ;
(iii) soustrayant dudit volume initial (V0) ladite partie volume (V1' (θ=0), V2' (θ=0)) dans laquelle ledit objet (2) n'est pas présent ;
(iv) répétant les opérations ci-dessus pour chaque angle d'acquisition θ, dans lequel à chaque itération, le volume initial correspond au volume V0 qui reste à la suite de l'itération précédente ; et
- l'identification dans ladite sculpture virtuelle (7) d'une séquence de centres de fil (8) représentative du trajet que suit ledit fil façonné pour former ledit objet (2).
